## Europäisches Patentamt

## European Patent Office

## Office européen des brevets

(11) Veröffentlichungsnummer: **0 160 935**
**B1**

(12) **EUROPÄISCHE PATENTSCHRIFT**

(51) Int. Cl.⁴: **B 23 B 29/034**

(45) Veröffentlichungstag der Patentschrift:
05.10.88

(21) Anmeldenummer: **85105355.3**

(22) Anmeldetag: **02.05.85**

(54) **Werkzeuganordnung.**

(30) Priorität: **11.05.84 DE 3417450**

(43) Veröffentlichungstag der Anmeldung:
**13.11.85 Patentblatt 85/46**

(45) Bekanntmachung des Hinweises auf die Patenterteilung:
**05.10.88 Patentblatt 88/40**

(84) Benannte Vertragsstaaten:
**AT BE CH DE FR GB IT LI LU NL SE**

(56) Entgegenhaltungen:
**EP - A - 0 019 018**
**DE - A - 3 116 596**
**DE - C - 859 703**
**US - A - 1 916 253**

(73) Patentinhaber: **Erowa AG, Winkelstrasse 8,
CH-5734 Reinach (CH)**

(72) Erfinder: **Schneider, Rudolf, Gondiswinkel,
CH-5734 Reinach (CH)**

(74) Vertreter: **Rottmann, Maximilian R., c/o Rottmann +
Quehl AG Glattalstrasse 37, CH-8052 Zürich (CH)**

ACTORUM AG

## Beschreibung

Die vorliegende Erfindung betrifft eine Werkzeuganordnung zur rotativen, spanabhebenden Bearbeitung einer zumindest teilweise geschlossenen Innenfläche eines Werkstückes nach dem Oberbegriff des Patentanspruches 1.

In der Praxis tritt des öfteren das Problem auf, ein Werkstück entlang einer seiner Innenflächen spanabhebend zu bearbeiten. Es kann sich dabei z.B. um eine im Werkstück vorhandene, eventuell einseitig geschlossene Bohrung handeln, die entlang eines gewissen Teilbereichs im Durchmesser vergrössert werden muss. Eine solche Bearbeitung erfolgt im allgemeinen auf einer Drehbank unter Verwendung einer Werkzeuganordnung, die einen im wesentlichen stabförmigen Werkzeugträger aufweist, an dessen Ende ein Bearbeitungswerkzeug, z.B. eine Hartmetall-Wendeplatte oder dgl. angeordnet ist. Der Werkzeugträger mitsamt dem Bearbeitungswerkzeug wird in die zusätzlich zu bearbeitende Bohrung eingeführt, wobei während des spanabhebenden Bearbeitungsvorganges eine relative Rotationsbewegung zwischen Bearbeitungswerkzeug und zu bearbeitendem Werkstück erzeugt wird, sei es durch Rotation des Bearbeitungswerkzeuges bei stillstehendem Werkstück, sei es durch Rotation des zu bearbeitenden Werkstückes bei stillstehendem Bearbeitungswerkzeug.

Damit im gattungsgemäss vorgesehenen Sinn überhaupt eine durchmessererweiternde Bearbeitung in einem Hohlraum eines Werkstückes ausgeführt werden kann, muss die Werkzeuganordnung in den Hohlraum eingeführt werden. Dies bedingt, dass der gesamte, in Radialrichtung vorhandene Durchmesser von Werkzeugträger und Bearbeitungswerkzeug geringer ist als die im Werkstück vorhandene Bohrung. Dabei treten eine Reihe von gegensätzlichen, teilweise sich widersprechenden Forderungen auf:

– Im Interesse einer grösstmöglichen Stabilität und damit einer bestmöglichen Bearbeitungsgenauigkeit soll der das Bearbeitungswerkzeug tragende Schaftteil der Werkzeuganordnung starr und unempfindlich gegen Biegung, somit möglichst mit grossem Durchmesser ausgebildet sein. Da das Bearbeitungswerkzeug selber über den Umfang des Schaftes herausragen muss, ergibt sich zwangsläufig die Konsequenz, dass die wirksame Breite desselben relativ gering ist, so dass der nutzbare Bearbeitungsbereich stark eingeschränkt wird.
– Umgekehrt wäre es wünschenswert, den das eigentliche Bearbeitungswerkzeug, z.B. die Wendeplatte, tragenden Schaft mit vergleichsweise geringem Durchmesser auszubilden, um den nutzbaren Bearbeitungsbereich der Werkzeuganordnung zu vergrössern. Dies wird jedoch zwangsläufig in verminderter Stabilität der Anordnung und demzufolge geringerer Bearbeitungsgenauigkeit auswirken, zumal der Schaft nur einseitig eingespannt ist und daher gegen Biegebeanspruchung anfällig ist.

In jedem Fall ist aber zu beobachten, dass die Werkzeuganordnung während des Bearbeitungsvorganges des Werkstückes mehr oder weniger starken Biegeschwingungsbeanspruchungen unterworfen ist, was sich bestenfalls in einer Verringerung der Bearbeitungspräzision, schlimmstenfalls jedoch in einer vorzeitigen Zerstörung des vergleichsweise teuren Bearbeitungswerkzeuges auswirken kann. In manchen Fällen ist wegen der zuvor erwähnten Biegeschwingungen eine spanabhebende Bearbeitung mit einer solchen Werkzeuganordnung überhaupt nicht mehr möglich oder sinnvoll, sodass zu anderen Bearbeitungsmethoden, meist unter Verwendung von teuren Spezialwerkzeugen, gegriffen werden muss.

Eine Aufgabe der vorliegenden Erfindung ist in erster Linie darin zu erblicken, die vorstehend erwähnten Nachteile einer gattungsgemässen Werkzeuganordnung zu vermeiden und eine Werkzeuganordnung zu schaffen, mit Hilfe derer eine äusserst präzise Bearbeitung z.B. einer Innenbohrung eines Werkstückes im Sinne einer Durchmessererweiterung entlang eines vorwählbaren, axialen Teilbereiches ermöglicht ist, wobei gleichzeitig alle mit unkontrollierten Vibrationen zusammenhängenden Probleme gelöst werden können, so dass die Standzeit der Werkstückanordnung, insbesondere des Bearbeitungswerkzeuges, wesentlich verlängert und die Einsatzmöglichkeit eines solchen Werkzeuges vergrössert wird.

Eine auf den ersten Blick ähnliche Werkzeuganordnung ist aus der FR-A 1 233 868 bekannt. Diese ist ebenfalls zur Bearbeitung von Innenflächen von Werkstücken bestimmt und besitzt auch einen im wesentlichen stabförmigen Werkzeugträger, an dessen Ende ein in axialer Richtung verstellbares Bearbeitungswerkzeug angeordnet ist. Ein ganz wesentlicher Unterschied ist aber darin zu sehen, dass diese Anordnung ein nicht drehendes, sondern oszillierendes Werkzeug zur Ausbildung von achsparallelen Längsnuten in einer Bohrung betrifft. Für den erfindungsgemässen Zweck, nämlich als Werkzeug zur Aufweitung einer Bohrung bzw. zur Ausbildung von koaxialen Ringnuten, ist die Anordnung gemäss dieser FR-A keinesfalls brauchbar.

Die Erfindung geht also von einer Werkzeuganordnung aus, mit einem im wesentlichen stabförmigen Werkzeugträger, an dessen Ende ein radial verstellbares Bearbeitungswerkzeug angeordnet ist und der ein Stabglied mit einer in axialer Richtung verlaufenden, durchgehenden Öffnung sowie eine darin verlaufende Steuerstange zur Verstellung des Werkzeuges aufweist. Zur Lösung der erfindungsgemässen Aufgabe zeichnet sich diese Anordnung gemäss der Erfindung durch die im Kennzeichen des Patentanspruches 1 angegebenen Merkmale aus.

Der genannte Winkel kann im Bereich von 25 bis 65° zur Längsachse des Stabgliedes liegen, wird aber im allgemeinen zumindest annähernd 45° betragen.

Bei einer bevorzugten Ausführungsform der Werkzeuganordnung ist vorgesehen, dass die im Bereich des freien Endes des Stabgliedes angeordneten, ersten Stützflächen durch die Wände eines das Stabglied unter einem Winkel von 45° durchdringenden, durchgehenden Kanals gebildet sind, in welchem Kanal das Bearbeitungswerkzeug bzw. Werkzeugtragglied verschiebbar gelagert ist. Diese Massnahme erlaubt, in Verbindung mit weiter unten noch zu erläuternden Massnahmen, dass das Bearbeitungswerkzeug, bzw. das Werkzeugtragglied in im wesentlichen radialer Richtung bezüglich der Achse des Stabgliedes in eine Bearbeitungsstellung ausgefahren und in eine Ruhestellung zurückgezogen werden kann, ohne dass sich die längsaxiale Position des wirksamen Teils des Bearbeitungswerkzeuges verändert.

Für die praktische Ausführung bestehen grundsätzlich mehrere Möglichkeiten; wie schon erwähnt, kann der in einem Winkel von 45° verlaufende Kanal entweder das Bearbeitungswerkzeug selbst oder ein Werkzeugtragglied verschiebbar aufnehmen. Im letzteren Fall ist das Bearbeitungswerkzeug, z.B. eine Wendeplatte aus Hartmetall, am freien Ende des Werkzeugtraggliedes befestigt. Jedenfalls ist es vorteilhaft, wenn der Kanal vieleckigen Querschnitt besitzt und wenn das Werkzeugtragglied bzw. das Bearbeitungswerkzeug im Querschnitt korrespondierende, prismatische Gestalt aufweisen, so dass eine axiale Verdrehung mit Sicherheit verhindert ist.

Wenn das Stabglied an seinem dem freien Ende abgewandten Ende eine unter einem Winkel von 45° abgeschrägte Stirnfläche besitzt, welche gegen das Steuerglied anliegt, und wenn das Steuerglied durch ein keilartiges Element gebildet ist, welches eine gegen das Stabglied gerichtete, an dessen Stirnfläche aufliegende, zur Achsrichtung des Werkzeugträgers um 45° geneigte, erste Oberfläche sowie eine gegen ein Abstützelement gerichtete, senkrecht zur Achse des Werkzeugträgers verlaufende, zweite Oberfläche aufweist, ist eine einfache Lösung geschaffen, einerseits das Stabglied in Achsrichtung abzustützen und andererseits durch achsensenkrechte Verschiebung des Keilelementes eine axiale Verschiebung des Stabgliedes zu bewirken.

Zu diesem Zweck kann das keilartige Element mit einer Antriebsvorrichtung in Wirkungsverbindung stehen, welche dazu bestimmt ist, dieses Element in mindestens einer zur Achsrichtung des Werkzeugträgers senkrechten Richtung zu verschieben.

Für die praktische Ausbildung des Abstützelementes bestehen ebenfalls verschiedene Ausführungsmöglichkeiten, je nachdem, ob die gesamte Werkzeuganordnung rotierbar oder feststehend ausgebildet werden soll. In jedem Fall soll das Abstützelement ein in zwei zueinander senkrechten, ihrerseits zur Achse des Werkzeugträgers ebenfalls senkrechten Richtungen frei bewegliches, in Achsrichtung des Werkzeugträgers jedoch starres Bauteil sein.

Wenn eine Lösung gewählt wird, bei der die Werkzeuganordnung bezüglich des Drehvermögens starr angeordnet ist, kann es sich empfehlen, dass das Abstützelement ein in X- und Y-Richtung beweglicher, in Z-Richtung jedoch starrer Kreuztisch ist.

Wenn hingegen eine drehbare Anordnung der Werkstückanordnung realisiert werden soll, kann es vorteilhaft sein, wenn das Abstützelement ein im wesentlichen scheibenförmiges, in radialer Richtung bewegliches, rotierbares, in Richtung der Achse des Werkzeugträgers aber unbewegliches, hydrostatisches Lagerelement ist.

Bei einer bevorzugten Weiterbildung des Erfindungsgegenstandes kann vorgesehen sein, dass das Stabglied zumindest entlang eines Teils seiner äusseren Oberfläche einen wenigstens annähernd dem Durchmesser des zu bearbeitenden Hohlraumes entsprechenden Durchmesser aufweist. Dadurch ist eine präzise, wohldefinierte Führung des auskragenden Endes der Werkzeuganordnung gegeben, welche in erster Linie der Bearbeitungsgenauigkeit und der Standzeit des Bearbeitungswerkzeuges zugute kommt.

Insbesondere dann, wenn das Stabglied im Bereich seines freien, den Werkzeugträger bzw. das Bearbeitungswerkzeug aufnehmenden Endes einen wenigstens annähernd dem Durchmesser des zu bearbeitenden Hohlraumes entsprechenden Durchmesser aufweist, kann die im Durchmesser zumindest bereichsweise zu vergrössernde Bohrung als Führungsbohrung Verwendung finden, welche das frei auskragende, im Durchmesser dieser Bohrung angepasste, das Bearbeitungswerkzeug tragende Ende abstützt und führt.

Eine weitere Ausführungsform sieht vor, dass das Stabglied in Axialrichtung längsverschiebbar gelagert ist. Durch diese Längsverschiebung und aufgrund der Tatsache, dass das Bearbeitungswerkzeug bzw. das Werkzeugtragglied einerseits und das vorzugsweise kleinförmig ausgebildete, achsensenkrecht verschiebbar gelagerte Steuerglied mit Hilfe des sich durch die Öffnung des Stabgliedes hindurch erstreckenden Verbindungsorganes zusammengekoppelt sind, ergibt sich die Möglichkeit, dass eine achsensenkrechte Verstellung des keilförmigen Steuergliedes ein Ausfahren bzw. Zurückziehen des Bearbeitungswerkzeuges bzw. des Werkzeugtraggliedes bewirkt. Somit ist die Möglichkeit gegeben, bei voll zurückgezogenem Bearbeitungswerkzeug die Werkzeuganordnung, namentlich deren Stabglied, in die zu bearbeitende Bohrung einzuführen, durch achsensenkrechte Verschiebung des Steuergliedes ein Ausfahren des zuvor innerhalb des Stabgliedes gelegenen Bearbeitungswerkzeuges um das gewünschte Mass zu bewirken und somit den Bearbeitungsvorgang einzuleiten.

Bei einer bevorzugten Ausführungsform des Erfindungsgegenstandes, insbesondere um die zuvor erwähnte, axiale Verschiebung des Stabgliedes zu bewirken, kann ein gegebenenfalls ausserdem zur Lagerung des Stabgliedes dienendes, kombiniertes Radial-Axial-Lager vorgesehen sein, welches zur Verschiebung des Stabgliedes in axialer Richtung der Werkzeuganordnung mit diesem bewegungsgekoppelt und mit einem Antriebsorgan zur axialen Verschiebung verbunden ist.

In gewissen Fällen mag es von Vorteil sein, dass im Bereich des freien Endes des Stabgliedes zwei untereinander einen Winkel einschliessende, gegen die um 45° geneigte bzw. geneigten Stützflächen bzw. Stützflächen anliegende Bearbeitungswerkzeuge bzw. Werkzeugträger vorgesehen sind. Unter Umständen kann dies bei manchen Werkstücken eine schnellere und/oder präzisere Bearbeitung zur Folge haben.

In der folgenden Beschreibung werden Ausführungsbeispiele des Erfindungsgegenstandes, unter Bezugnahme auf die beiliegenden Zeichnungen, näher erläutert. Im einzelnen zeigen:

Fig. 1 eine prinzipielle, schematisch dargestellte Werkzeuganordnung der bekannten Art in einem schematischen Seitenriss,

Fig. 2 eine prinzipielle, schematisch dargestellte Werkzeuganordnung gemäss der Erfindung, ebenfalls in einem schematischen Seitenriss,

Fig. 3a einen schematischen Axialschnitt durch ein erstes Ausführungsbeispiel der erfindungsgemässen Werkzeuganordnung mit eingezogenem Bearbeitungswerkzeug,

Fig. 3b einen schematischen Axialschnitt durch das erste Ausführungsbeispiel gemäss Fig. 3a mit ausgefahrenem Bearbeitungswerkzeug,

Fig. 4a einen schematischen Axialschnitt durch ein zweites Ausführungsbeispiel der erfindungsgemässen Werzeuganordnung mit eingezogenem Bearbeitungswerkzeug, und

Fig. 4b einen schematischen Axialschnitt durch das zweite Ausführungsbeispiel gemäss Fig. 4a mit ausgefahrenem Bearbeitungswerkzeug.

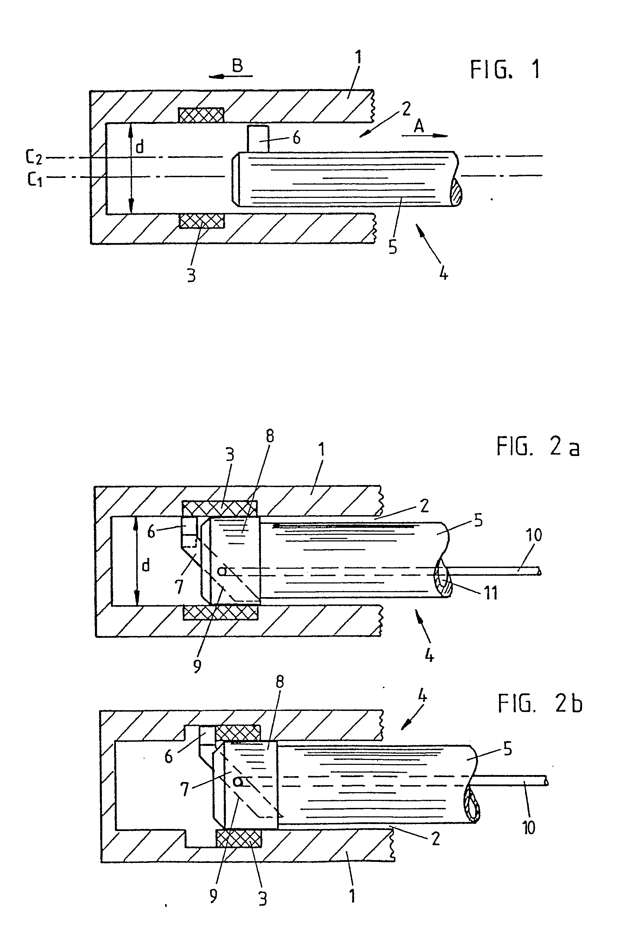

In der Fig. 1 ist eine prinzipielle, schematische Anordnung herkömmlicher Art dargestellt, mit welcher veranschaulicht werden soll, wie nach bisherigem Stand der Technik z.B. eine Sackbohrung bereichsweise im Durchmesser vergrössert werden kann.

Das Werkstück 1, lediglich ausschnittweise dargestellt, besitzt eine Sackbohrung 2, die in einem gewissen, sich in Axialrichtung erstreckenden Bereich 3 erweitert werden soll. In der Zeichnung ist dieser Bereich 3 in der Schnittdarstellung kreuzschraffiert dargestellt. Zu diesem Zwecke wird ein Werkzeugträger 4 verwendet, dessen Endbereich ausschnittweise dargestellt ist. Dieser Endbereich umfasst ein Stabglied 5, das an seinem Ende ein radial abstehendes Bearbeitungswerkzeug 6, z.B. eine Hartmetall-Wendeplatte trägt.

Damit der Werkzeugträger 4 mit dem abstehenden Bearbeitungswerkzeug 6 überhaupt in die zu bearbeitende Sackbohrung 2 eingeführt werden kann, darf die achsensenkrecht gemessene Dimension desselben höchstens den Wert d, d.h. den Innendurchmesser der Sackbohrung 2 betragen. Die Einführung des Werkzeuges in das Werkstück 1 erfolgt dabei entlang der Achse C-1.

Nun wird das Stabglied 5 in Richtung des Pfeiles B verschoben, bis die Arbeitskante des Bearbeitungswerkzeuges 6 die vorgesehene Stelle beim zu bearbeitenden Bereich 3 erreicht hat, und anschliessend festgehalten. Es leuchtet ein, dass das Stabglied 5 lediglich an einer relativ weit vom Werkzeug 6 entfernten Stelle eingespannt werden kann, so dass im wesentlichen der in Fig. 1 dargestellte Schaft-Endbereich einer vergleichsweise starken Biegebeanspruchung unterworfen ist.

Nun wird das Werkstück 1, welches in eine geeignete Bearbeitungsmaschine, z.B. in eine Drehbank (nicht dargestellt), eingespannt worden ist, in Drehung versetzt, wobei gleichzeitig die Achse C-1 allmählich in Richtung auf die Achse C-2 hin parallel verschoben wird. Damit gelangt die Arbeitskante des Bearbeitungswerkzeuges 6 in den zu bearbeitenden Bereich 3 und trägt das kreuzschraffiert dargestellte Material ab. Selbstverständlich ist, neben einer Verschiebung der Achse C-1 zur Achse C-2 hin, gegebenenfalls gleichzeitig oder alternierend eine Verschiebung des Stabgliedes 5 in Richtung des Pfeiles A wie auch in Richtung des Pfeiles B erforderlich, um den gewünschten Material-Abtrag zu gewährleisten.

Infolge der frei auskragenden Anordnung des in der Fig. 1 dargestellten Stabgliedes 5 und insbesondere des an dessen Ende angebrachten Bearbeitungswerkzeuges 6 treten die bereits in der Einleitung diskutierten Probleme auf, nämlich ungenaue Bearbeitung des Werkstückes 1 infolge unzureichender Führung und Abstützung des Bearbeitungswerkzeuges 6 und Gefahr der Zerstörung des Bearbeitungswerkzeuges 6 infolge unkontrollierter Schwingungen.

Hier will nun die erfindungsgemässe Werkzeuganordnung Abhilfe schaffen. Das grundsätzliche Funktionsprinzip ist dabei in einer schematischen Darstellung in der Fig. 2 veranschaulicht, wobei unter a die Ausgangsstellung und unter b die Bearbeitungsstellung gezeigt ist.

Die Voraussetzungen mögen, zur Verdeutlichung des Grundprinzipes, genau gleich sein, wie im Zusammenhang mit Fig. 1 diskutiert: Ein Werkstück 1 mit einer Sackbohrung 2 soll entlang eines sich axial erstreckenden, kreuzschraffiert dargestellten Bereiches 3 im Durchmesser erweitert werden. Zu diesem Zwecke besitzt der nur grob und schematisch in einem Endbereich dargestellte Werkzeugträger 4 ein schaft- bzw. stabförmiges Glied 5, das an seinem freien Ende mit einem Bearbeitungswerkzeug 6 versehen ist. Dieses findet auf einem Werkzeugtraggl ied 7 Aufnahme, welches in einem Werkzeugkopf 8 verschiebbar gelagert ist. Zur Aufnahme des Werkzeugtraggliedes 7 ist im Werkzeugkopf 8 ein Aufnahmekanal 9 vorgesehen, dessen Richtung einen Winkel von 45° zur Achse des stabförmigen Gliedes 5 einschliesst.

Der Aussendurchmesser d des Werkzeugkopfes 8 entspricht zumindest annähernd, unter Beobachtung üblicher Toleranzen, dem Innendurchmesser der zu bearbeitenden Bohrung.

In der unter a in Fig. 2 dargestellten Lage befindet sich das Werkzeugtragglied 7 und damit das Bearbeitungswerkzeug 6 in einer zurückgezogenen Lage, derart, dass die Arbeitskante des Bearbeitungswerkzeuges 6 nicht über die Peripherie des Werkzeugkopfes 8 hinausragt. Damit sind zwei Vorteile erzielbar:

- Der Durchmesser d des Werkzeugkopfes 8 kann genau der zu bearbeitenden Sackbohrung 2 angepasst werden und bildet somit eine präzise und stabile Führung der gesamten Werkzeuganordnung.
- Der Durchmesser des stabartigen Gliedes 5 kann relativ gross gewählt werden und besitzt demzufolge ein beträchtlich vergrössertes Widerstandsvermögen gegen Biegekräfte und unkontrollierbare Schwingungen.

Das Werkzeugtragglied 7 ist mit einer Steuerstange 10 gekoppelt, die sich durch eine axiale Öffnung 11 des stabförmigen Werkzeugträgers hindurch erstreckt und deren Zweck im folgenden noch näher erläutert werden wird.

Gemäss der Darstellung unter b in Fig. 2 erfolgt die Bearbeitung des Werkstückes 1 mit Hilfe des aus dem Werkzeugkopf 8 ausgefahrenen Bearbeitungswerkzeuges 6. Grundsätzlich spielt es dabei keine Rolle, ob das zu bearbeitende Werkstück 1 oder der Werkzeugkopf 8 mit dem Bearbeitungswerkzeug 6 in Drehung versetzt wird. Die Verschiebung des Bearbeitungswerkzeuges 6 in den abzutragenden Bereich 3 hinein erfolgt durch Verschiebung des Werkzeugtraggliedes 7 entlang dessen Aufnahmekanal 9. Zu diesem Zwecke hat die noch näher zu erläuternde Steuerstange 10 einen wesentlichen Beitrag zu leisten. Es versteht sich von selbst, dass bei der Bearbeitung des Werkstückes 1 entweder eine Axialverschiebung der Werkzeuganordnung in Richtung des Pfeiles A oder eine Axialverschiebung des Werkstückes in Richtung des Pfeiles B zu erfolgen hat. Weiter ist zu erwähnen, dass der Vorschub des Bearbeitungswerkzeuges 6 in Radialrichtung, vorzugsweise unter Einsatz einer NC-Steuerung, mit der Axialrelativbewegung zwischen Werkzeuganordnung und Werkstück koordiniert ist.

Jedenfalls ist auch aus der unter b gezeigten Darstellung in Fig. 2 deutlich zu entnehmen, dass der Werkzeugkopf 8 zumindest über einen wesentlichen Teil seiner axialen Länge durch die Innenwandung der zu bearbeitenden Sackbohrung 2 geführt ist, so dass eine präzise Arbeitsweise gewährleistet ist und jegliche Vibrationen, die bei herkömmlicher Bearbeitungsweise auftreten können, verhindert sind.

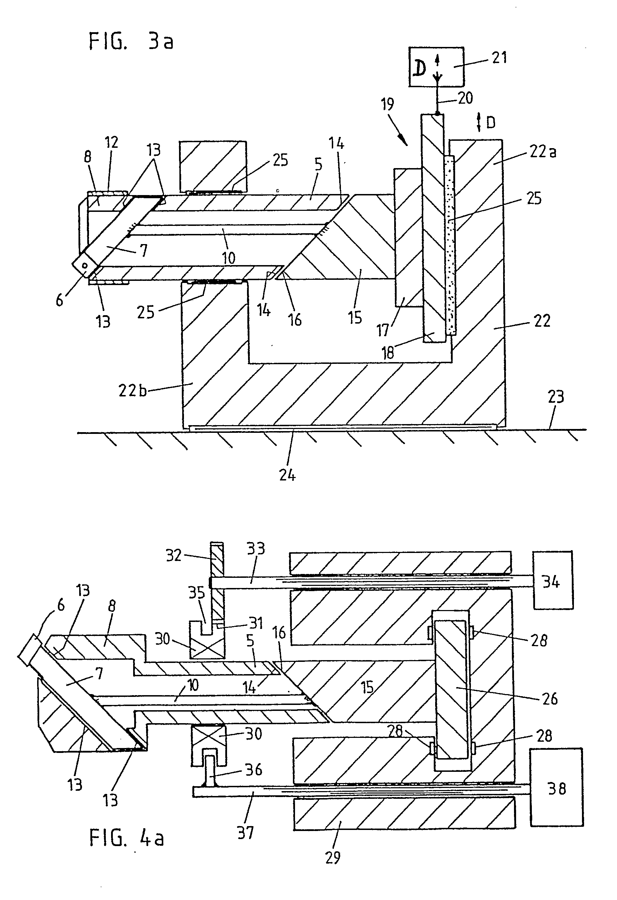

In der Fig. 3a ist eine schematische Darstellung eines Ausführungsbeispieles der erfindungsgemässen Werkzeuganordnung in einem Axialschnitt dargestellt. Deutlich zu erkennen ist der Werkzeugkopf 8, welcher z.B. mit einer umfangsseitigen Führungshülse 12 versehen sein kann, und das darin unter einem Winkel von 45° zur Achse der Werkzeuganordnung verschiebbar gelagerte Werkzeugtragglied 7 mit endseitig angeordnetem Bearbeitungswerkzeug 6 und das stabartige Glied 5. Das das Bearbeitungswerkzeug 6 aufnehmende Werkzeugtragglied 7 stützt sich dabei gegen um 45° zur Längsachse der Werkzeuganordnung geneigte Stützflächen 13 ab, die durch die Wandungen eines z.B. prismatischen Querschnitt besitzenden Kanals gebildet sein können.

Das entgegengesetzte Ende des stabförmigen Gliedes 5 ist mit parallelen ebenfalls um 45° geneigten Stützflächen 14 versehen, welche gegen ein als keilförmiges Element ausgebildetes Steuerglied 15 anliegen, welches eine ebenfalls um 45° geneigte Stützfläche 16 besitzt. Das Werkzeugtragglied ist mittels der zuvor erwähnten Steuerstange 10 mit dem keilförmigen Steuerglied 15 starr verbunden. Endseitig ist letzteres an einem durch zwei Platten 17 und 18 gebildeten Kreuztisch 19 abgestützt, wobei die Platte 18 über ein Verbindungsglied 20 mit einem Antrieb 21 verbunden ist, welcher eine Verschiebung der Platte 18 beidseitig in Richtung des Pfeiles D bewirken kann.

Die ganze Anordnung wird durch einen Reitstock 22 getragen, welcher unter Zwischenschaltung einer Linearführung 24 auf einem Maschinengestell 23 gelagert ist. Die Platte 18 des Kreuztisches 19 stützt sich über ein Lager 25 an einen hinteren Schenkel 22a des Reitstockes 22 ab und ist somit gegen axiale Verschiebung gesichert. Ein vorderer Schenkel 22b des Reitstockes besitzt eine ein Lager 25 aufnehmende Durchbrechung, welche zur Abstützung des Stabgliedes 5 dient.

Aus der Darstellung in Fig. 3a ist zu entnehmen, dass sich die gesamte Werkzeuganordnung in Ruhestellung befindet, mit zurückgezogenem Bearbeitungswerkzeug 6, so dass dieses in eine zu bearbeitende Sackbohrung eines Werkstückes (nicht dargestellt) eingeführt werden kann. In diesem Zustand sind das Stabglied 5 und das keilförmige Steuerglied 15 in etwa in koaxialer Ausrichtung.

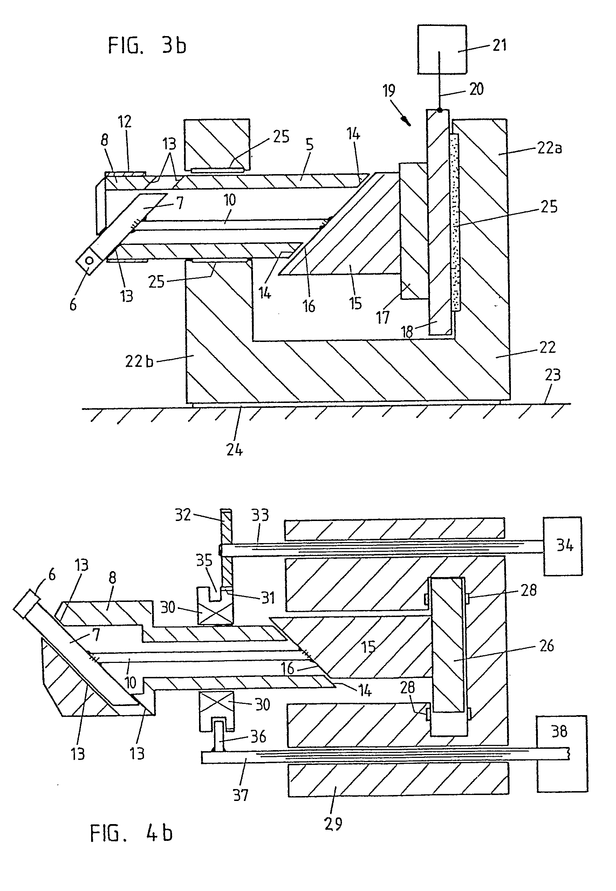

In der Fig. 3b ist der Zustand dargestellt, wie er während der spanabhebenden Bearbeitung der Innenfläche einer Sackbohrung herrscht. Es ist deutlich zu erkennen, dass das Bearbeitungswerkzeug 6 mit seiner Arbeitskante nun über die periphere Fläche des Werkzeugkopfes 8 herausragt, währenddem dieser in der zu bearbeitenden Bohrung durch die Führungshülse 12 abgestützt ist.

Das Ausfahren des Werkzeugträgers 7 und damit des Bearbeitungswerkzeuges 6 geschieht wie folgt:

Gegenüber dem im Fig. 3a gezeigten Zustand wird der Antrieb 21 betätigt, in der Weise, dass die Platte 18 unter Wirkung des Verbindungsgliedes 20 in Richtung des Pfeiles D gegen unten verschoben wird. Die sich auf dem Schenkel 22a des Reitstockes 22 abstützende Führungslagerung sorgt für ein müheloses Vollziehen dieses Verschiebungsvorganges.

Gleichzeitig bewegt sich die Platte 17 und damit das damit fest verbundene, keilförmige Steuerglied 15 ebenfalls nach unten. Infolge der Tatsache, dass das Steuerglied 15 vermittels der Steuerstange 10 starr mit dem Werkzeugträgerglied 7 verbunden ist, bewegt es sich um genau denselben Betrag gegen unten, wobei die unter 45° geneigte Stirnfläche des schaftförmigen Werkzeugträgers entlang der ebenfalls um 45° geneigten Stützfläche 16 des keilförmigen Elementes gleitet und wobei das Werkzeugträgerglied 7 entlang der ebenfalls um 45° geneigten Stützflächen 13 verschoben wird. Zwangsläufig ergibt sich, wie insbesondere aus Fig. 3b ersichtlich ist, eine axiale Verschiebung des Stabgliedes 5, wobei das Lager 25 zweckmässigerweise so ausgebildet ist, dass es nicht nur eine im angesprochenen Sinn erfolgende Verschiebung des Stabgliedes 5, sondern auch eine allfällige Rotation desselben aufnehmen kann.

Die im Zusammenhang mit Fig. 3a und 3b beschriebene Ausführungsform eignet sich insbesondere dazu, ein (nicht dargestelltes) rotierendes Werkstück mittels der feststehenden Werkzeuganordnung unter Wirkung des Bearbeitungswerkzeuges 6 spanabhebend zu bearbeiten. In diesem Zusammenhang ist hervorzuheben, dass die wirksame Arbeitskante des Bearbeitungswerkzeuges 6 nur in achsensenkrechter Richtung bewegt wird, wenn es aus dem schaftförmigen Werkzeugträger ausfahren wird, so dass also von dieser Seite her eigentlich keine Verschiebung des Werkstückes in Achsenrichtung erforderlich ist, die sich an eine fortschreitende Ausführung des Bearbeitungswerkzeuges 6 anpassen müsste. Da in der Praxis aber in den meisten Fällen eine Bearbeitung eines sich in Achsrichtung erstreckenden Bereiches des Werkstückes erforderlich ist, wird es nötig sein, allerdings unter sehr einfachen, leicht zu beherrschenden, geometrischen Voraussetzungen, einerseits das Ausfahren des Bearbeitungswerkzeuges 6 durch Betätigung des Antriebes 21 und andererseits die Axialverschiebung des Werkstückes zu steuern.

Unter Umständen kann es wünschenswert sein, das zu bearbeitende Werkstück fest einzuspannen und die Werkzeuganordnung in eine drehende Bewegung zu versetzen, um den gewünschten Bearbeitungsvorgang am Werkstück auszuführen. Ein solches Ausführungsbeispiel ist in den Fig. 4a und 4b dargestellt, wobei 4a wiederum den Zustand zeigt, in welchem das Bearbeitungswerkzeug in eingefahrener Lage ist, in welche es nicht über die äussere Oberfläche des Werkzeugkopfes hinausragt, während Fig. 4b verdeutlicht, welche Lage das Bearbeitungswerkzeug 6 während des eigentlichen Bearbeitungsvorganges einnimmt.

Im Unterschied zur Anordnung gemäss Fig. 3a und 3b ist das keilförmige Steuerglied 15 mit einer hydrostatischen Lagerplatte 26 verbunden, welche in einem hydrostatischen Lager Aufnahme findet. Letzteres ist mit Drucköizufuhreinrichtungen 28 versehen; auf die Ausbildung einer derartigen Anordnung muss im vorliegenden Zusammenhang nicht näher eingegangen werden, da diese an sich bekannt ist. Jedenfalls ist die hydrostatische Lagerplatte nicht nur zu einer Rotationsbewegung, sondern auch zu einer Taumelbewegung in Richtung senkrecht zur Rotationsachse derselben befähigt.

Das keilförmige Steuerglied 15 mit daran befestigter hydrostatischer Lagerplatte 26 ist in einem Lagerblock 29 aufgenommen. Entsprechend Fig. 3a und 3b besitzt das keilförmige Steuerglied 15 eine um 45° abgeschrägte Stirnfläche 16, gegen welche die Stirnflächen 14, ebenfalls entsprechend um 45° abgeschrägt, Aufnahme finden. Das Stabglied 5 ist dabei mittels zweier Lager, sogenannter kombinierter Radial-Axial-Lager 30 geführt. Die Ausbildung des Werkzeugkopfes mit Bearbeitungswerkzeug-Träger 7, Steuerstange 10, welche mit dem keilförmigen Steuerglied 15 verbunden ist, ist entsprechend der Ausbildung gemäss Fig. 3a und 3b ausgeführt.

Das Lager 30 ist mit dem Stabglied 5 drehfest verbunden, wobei ein Teil seiner Peripherie 31 mit einer Verzahnung versehen ist, welche mit einem Zahnrad 32 kämmt; das Zahnrad 32 wird über eine Welle 33 durch einen Motor 34 in Rotation versetzt, was zur Folge hat, dass der Werkzeugkopf 8 ebenfalls eine rotierende Bewegung ausführt.

Im weiteren ist das Lager 30 mit einer umlaufenden Ringnut 35 versehen, in welche ein Mitnehmer 36 eingreift, welcher am freien Ende einer axial verschiebbaren Welle 37 angeordnet ist. Ein Antriebsorgan 38 ist befähigt, unter Einfluss eines nicht näher dargestellten Steuerorganes das Stabglied 5 in axialer Richtung zu verschieben; damit ändert sich zum einen die radiale Position der hydrostatischen Lagerplatte 26 und zum andern die Position des Bearbeitungswerkzeuges 6. Diese Situation, d.h. die Situation nach axialer Verschiebung des Stabgliedes 5, ist in der Fig. 4b dargestellt. Auch hier ist zu erwähnen, dass trotz der axialen Verschiebung des Werkzeugträgers 5 keine entsprechende axiale Verschiebung der wirksamen Kante des Bearbeitungswerkzeuges 6, sondern eine entsprechende radiale Verschiebung des Bearbeitungswerkzeuges 6 bewirkt wird.

Schliesslich sei darauf hingewiesen, dass auch der in den Fig. 4a und 4b dargestellte Werkzeugkopf 8, wenn er nicht einen mit dem Innendurchmesser zu bearbeitenden Bohrung übereinstimmenden Aussendurchmesser aufweist, mit entsprechenden Anpassungshülsen entlang seiner Peripherie versehen sein kann, um eine genau definierte, weitgehend spielfreie um damit eine höchste Bearbeitungspräzision gewährleistende Führung zu erzielen.

**Patentansprüche**

1. Werkzeuganordnung zur rotativen, spanabhebenden Bearbeitung einer zumindest teilweise geschlossenen Innenfläche eines Werkstückes (1), mit einem im wesentlichen stabförmigen Werkzeugträger (4), an dessen Ende ein Bearbeitungswerkzeug (6) angeordnet ist und der ein Stabglied (5) mit einer in axialer Richtung verlaufenden, durchgehenden Öffnung (11) sowie eine darin verlaufende Steuerstange (10) zur radialen Verstellung des Werkzeuges (6) aufweist, dadurch gekennzeichnet, dass das Stabglied (5) parallele, unter einem Winkel zu dessen Längsachse verlaufende, im Bereich der beiden Enden angeordnete erste und zweite Stützflächen (13, 14), mindestens ein einerends am Stabglied (5) verschiebbar angeordnetes, gegen die erste bzw. die ersten Stützfläche(n) (13) des Stabgliedes (5) anliegendes Bearbeitungswerkzeug (6) bzw. Werkzeugtragglied (7) und ein anderenends am Stabglied (5) senkrecht zur Werkzeugträgerachse verschiebbar gelagertes, gegen die zweite Stützfläche (14) des Stabgliedes (5) anliegendes Steuerglied (15) aufweist, wobei die sich durch die Öffnung des Stabgliedes (5) hindurch erstreckende Steuerstange (10) einerseits an dem bzw. an den Bearbeitungswerkzeug(en) (6) bzw. Werkzeugtragglied(ern) (7) und andererseits am Steuerglied (15) befestigt ist und diese in vorbestimmtem Abstand zusammenkoppelt.

2. Werkzeuganordnung nach Anspruch 1, dadurch gekennzeichnet, dass die Stützflächen (13, 14) unter einem Winkel von 25 bis 65°, vorzugsweise unter einem zumindest annähernd 45° betragenden Winkel zur Längsachse des Stabgliedes (5) verlaufen.

3. Werkzeuganordnung nach Anspruch 1 oder 2, dadurch gekennzeichnet, dass die im Bereich des freien Endes des Stabgliedes (5) angeordneten, ersten Stützflächen (13) durch die Wände eines das Stabglied (5) unter einem Winkel von 45° durchdringenden, durchgehenden Kanals gebildet sind, in welchem Kanal das Bearbeitungswerkzeug (6) bzw. Werkzeugtragglied (7) verschiebbar gelagert ist.

4. Werkzeuganordnung nach Anspruch 3, dadurch gekennzeichnet, dass der Kanal einen vieleckigen Querschnitt besitzt und dass das Werkzeugtragglied (7) korrespondierende, prismatische Gestalt aufweist, verschiebbar entlang des Kanals angeordnet ist und an seinem freien Ende das Bearbeitungswerkzeug (6) trägt.

5. Werkzeuganordnung nach Anspruch 3, dadurch gekennzeichnet, dass der Kanal einen vieleckigen Querschnitt besitzt und dass das Bearbeitungswerkzeug (6) korrespondierende, prismatische Gestalt aufweist und verschiebbar entlang des Kanals angeordnet ist.

6. Werkzeuganordnung nach einem der Ansprüche 1 bis 4, dadurch gekennzeichnet, dass das Stabglied (5) an seinem dem freien Ende abgewandten Ende eine unter einem Winkel von 45° abgeschrägte Stirnfläche (14) besitzt, welche gegen das Steuerglied (15) anliegt.

7. Werkzeuganordnung nach Ansprüchen 1 und 6, dadurch gekennzeichnet, dass das Steuerglied (15) durch ein keilartiges Element gebildet ist, welches eine gegen das Stabglied (5) gerichtete, an dessen Stützfläche (14) aufliegende, zur Achsrichtung des Werkzeugträgers um 45° geneigte, erste Stützfläche (16) sowie eine gegen ein Abstützelement gerichtete, senkrecht zur Achse des Werkzeugträgers verlaufende, zweite Oberfläche aufweist.

8. Werkzeuganordnung nach Anspruch 7, dadurch gekennzeichnet, dass das keilartige Steuerglied (15) mit einer Antriebsvorrichtung (21) in Wirkungsverbindung steht, welche dieses Element (15) in mindestens einer zur Achsrichtung des Werkzeugträgers senkrechten Richtung verschiebt.

9. Werkzeuganordnung nach Anspruch 7 und 8, dadurch gekennzeichnet, dass das Abstützelement ein in zwei zueinander senkrechten, ihrerseits zur Achse des Werkzeugträgers ebenfalls senkrechten Richtungen frei bewegliches, in Achsrichtung des Werkzeugträgers jedoch starres Bauteil ist.

10. Werkzeuganordnung nach Anspruch 9, dadurch gekennzeichnet, dass das Abstützelement ein in X- und Y-Richtung beweglicher, in Z-Richtung jedoch starrer Kreuztisch (19) ist.

11. Werkzeuganordnung nach Anspruch 9, dadurch gekennzeichnet, dass das Abstützelement eine im wesentlichen scheibenförmige, in radialer Richtung bewegliche, gegebenenfalls rotierbare, in Richtung der Achse des Werkzeugträgers aber unbewegliche, hydrostatische Lagerplatte (26) ist.

12. Werkzeuganordnung nach einem der vorangehenden Ansprüche, dadurch gekennzeichnet, dass das Stabglied (5) zumindest entlang eines Teils seiner äusseren Oberfläche (8, 12) einen wenigstens annähernd dem Durchmesser des zu bearbeitenden Hohlraumes entsprechenden Durchmesser aufweist.

13. Werkzeuganordnung nach Anspruch 12, dadurch gekennzeichnet, dass das Stabglied (5) im Bereich seines freien, den Werkzeugträger bzw. das Bearbeitungswerkzeug aufnehmenden Endes einen wenigstens annähernd dem Durchmesser des zu bearbeitenden Hohlraumes entsprechenden Durchmesser aufweist.

14. Werkzeuganordnung nach einem der vorangehenden Ansprüche, dadurch gekennzeichnet, dass diese drehbar in einer Bearbeitungsmaschine aufgenommen ist, wobei das Stabglied (5) in Axialrichtung längsverschiebbar gelagert ist.

15. Werkzeuganordnung nach Anspruch 14, dadurch gekennzeichnet, dass zur Lagerung des Stabgliedes (5) ein kombiniertes Radial-Axial-Lager (30) vorgesehen ist, welches zur Verschiebung des Stabgliedes in axialer Richtung der Werkzeuganordnung mit diesem bewegungsgekoppelt und mit einem Antriebsorgan (38) zur axialen Verschiebung verbunden ist.

16. Werkzeuganordnung nach einem der vorangehenden Ansprüche, dadurch gekennzeichnet, dass im Bereich des freien Endes des Stabgliedes (5) zwei untereinander einen Winkel einschliessenden Bearbeitungswerkzeuge (6) bzw. Werkzeugträger (7) vorgesehen sind, welche gegen die um 45° geneigte bzw. geneigten Stützfläche bzw. Stützflächen anliegen.

## Claims

1. Tool arrangement for the rotary machining of an at least partly closed inner surface of a work piece (1), with a substantially rod-shaped tool carrier (4), located at the end of which is a machining tool (6) and which comprises a rod member (5) with a continuous opening (11) extending in the axial direction and a control rod (10) extending therein for the radial adjustment of the tool (6), characterised in that the rod member (5) comprises parallel first and second support surfaces (13, 14) extending at an angle to its longitudinal axis and located in the region of the two ends, at least one machining tool (6) or toolcarrying member (7) arranged to slide at one end on the rod member (5) and bearing the first support surface (surfaces) (13) of the rod member (5) and a control member (15) mounted to slide at the other end on the rod member (5) perpendicular to the axis of the tool carrier and bearing against the second support surface (14) of the rod member (5), the control rod (10) extending through the opening of the rod member (5) being attached at one end to the machining tool or tools (6) or toolcarrying member or members (7) and at the other end to the control member (15) to interconnect them at a predetermined spacing.

2. Tool arrangement according to Claim 1, characterised in that the support surfaces (13, 14) extend at an angle of 25 to 65°, preferably at an angle amounting to at least approximately 45° with respect to the longitudinal axis of the rod member (5).

3. Tool arrangement according to Claim 1 or 2, characterised in that the first support surfaces (13) located in the region of the free end of the rod member (5) are formed by the walls of a continuous channel penetrating the rod member (5) at an angle of 45°, in which channel the machining tool (6) or tool-carrying member (7) is slidably mounted.

4. Tool arrangement according to Claim 3, characterised in that the channel has a polygonal cross-section and that the tool-carrying member (7) has a corresponding, prismatic shape, is arranged to slide along the channel and carries the machining tool (6) at its free end.

5. Tool arrangement according to Claim 3, characterised in that the channel has a polygonal cross-section and that the machining tool (6) has a corresponding, prismatic shape and is arranged to slide along the channel.

6. Tool arrangement according to one of Claims 1 to 4, characterised in that at its end remote from the free end, the rod member (5) comprises an end face (14) bevelled at an angle of 45°, which bears against the control member (15).

7. Tool arrangement according to Claims 1 and 6, characterised in that the control member (15) is formed by a wedgelike member, which comprises a first support surface (16) directed towards the rod member (5), resting against its support surface (14) and inclined by an angle of 45° with respect to the axial direction of the tool carrier and a second surface directed towards a support member and extending at right angles to the axis of the tool carrier.

8. Tool arrangement according to Claim 7, characterised in that the wedge-like control member (15) is in operative connection with a drive device (21), which moves this member (15) in at least one direction at right angles to the axial direction of the tool carrier.

9. Tool arrangement according to Claims 7 and 8, characterised in that the support member is a component which is able to move freely in two directions at right angles to each other, in turn likewise at right angles to the axis of the tool carrier, but which component is rigid in the axial direction of the tool carrier.

10. Tool arrangement according to Claim 9, characterised in that the support member is a cross-table (19) able to move in the X- and Y-direction, but rigid in the Z-direction.

11. Tool arrangement according to Claim 9, characterised in that the support member is a substantially disc-shaped hydrostatic base plate (26) able to move in the radial direction, which is possibly rotatable but not able to move in the direction of the axis of the cool carrier.

12. Tool arrangements according to one of the preceding Claims, characterised in at least along part of its outer surface (8, 12), the rod member (5) has a diameter corresponding at least approximately to the diameter of the cavity to be machined.

13. Tool arrangement according to Claim 12, characterised in that the region of its free end receiving the tool carrier or machining tool, the rod member (5) has a diameter corresponding at at least approximately to the diameter of the cavity to be machined.

14. Tool arrangement according to one of the preceding Claims, characterised in that the latter is mounted to rotate in a processing machine, the rod member (5) being mounted to slide longitudinally in the axial direction.

15. Tool arrangement according to Claim 14, characterised in that provided for mounting the rod member (5) is a combined radial-axial bearing (30), which for the sliding of the rod member in the axial direction of the tool arrangement is connected to move with the latter and is connected to a drive member (38) for the axial displacement.

16. Tool arrangement according to one of the preceding Claims, characterised in that provided in the region of the free end of the rod member (5) are two machining tools (6) or tool carriers (7) enclosing an angle therebetween, which bear against the support surface or surfaces inclined by an angle of 45°.

## Revendications

1. Outillage destiné à permettre l'usinage rotatif, par enlèvement de copeaux, d'une surface intérieure, au moins partiellement fermée, d'une pièce à usiner (1), comportant un support d'outil essentiellement en forme de barre (4) à l'extrémité duquel est disposé un outil d'usinage (6) et qui comporte un élément en forme de barre (5) offrant une ouverture (11) s'étendant suivant la direction axiale et le traversant de part en part, ainsi qu'une tige de commande (10) s'étendant dans cette ouverture et permettant un réglage radial de l'outil (6), caractérisé en ce que l'élément en forme de barre (5) comprend des premières et des secondes surfaces d'appui (13, 14) parallèles, s'étendant sous un certain angle par rapport à son axe longitudinal et disposée dans la zone des deux extrémités, au moins un outil d'usinage (6) ou porte-outil (7) disposé de façon à pouvoir se déplacer en translation sur l'élément en forme de barre (5) à une extrémité de celui-ci et prenant appui sur la première ou les premières surfaces d'appui (13) de cet élément en forme de barre (5), et un élément de commande (15) monté de façon à pouvoir se déplacer en translation, perpendiculairement à l'axe du support d'outil, sur l'élément en forme de barre (5) à l'autre extrémité de celui-ci et prenant appui sur la seconde surface d'appui (14) de l'élément en forme de barre (5), tandis que la tige de commande (10) qui s'étend à travers l'ouverture de cet élément en forme de barre (5) est fixée d'une part sur le ou les outils d'usinage (6) ou le ou les porte-outil (7) et d'autre part sur l'élément de commande (15) et accouple ceux-ci entre eux à une distance préfixée.

2. Outillage suivant la revendication 1, caractérisé en ce que les surfaces d'appui (13, 14) s'étendent sous un angle de 25 à 65 degrés, de préférence sous un angle valant au moins approximativement 45 degrés, par rapport à l'axe longitudinal de l'élément en forme de barre (5).

3. Outillage suivant la revendication 1 ou 2, caractérisé en ce que les premières surfaces d'appui (13), situées dans la zone de l'extrémité libre de l'élément en forme de barre (5), sont constituées par les parois d'un canal qui traverse de part en part l'élément en forme de barre (5) sous un angle de 45 degrés et dans lequel l'outil d'usinage (6) ou le porte-outil (7) est monté de façon à pouvoir se déplacer en translation.

4. Outillage suivant la revendication 3, caractérisé en ce que le canal offre une section transversale polygonale et en ce que le porte-outil (7) possède une forme prismatique correspondante, est disposé de manière à pouvoir se déplacer en translation le long de ce canal et porte à son extrémité libre l'outil d'usinage (6).

5. Outillage suivant la revendication 3, caractérisé en ce que le canal offre une section transversale polygonale et en ce que l'outil d'usinage (6) possède une forme prismatique correspondante et est disposé de manière à pouvoir se déplacer en translation le long de ce canal.

6. Outillage suivant l'une des revendications 1 à 4, caractérisé en ce que, à son extrémité opposée à l'extrémité libre, l'élément en forme de barre (5) offre une surface frontale (14) biseautée sous un angle de 45 degrés et prenant appui sur l'élément de commande (15).

7. Outillage suivant les revendications 1 et 6, caractérisé en ce que l'élément de commande (15) est constitué par un élément analogue à un coin, qui comporte une première surface d'appui (16) tournée vers l'élément en forme de barre (5), prenant appui sur la surface d'appui (14) de celui-ci et inclinée de 45 degrés par rapport à la direction axiale du support d'outil, ainsi qu'une seconde surface tournée vers un élément de support et s'étendant perpendiculairement à l'axe du support d'outil.

8. Outillage suivant la revendication 7, caractérisé en ce que l'élément de commande analogue à un coin (15) est relié, de façon à coopérer avec lui, à un dispositif d'entraînement (21) qui déplace cet élément (15) en translation suivant au moins une direction perpendiculaire à la direction axiale du support d'outil.

9. Outillage suivant la revendication 7 et 8, caractérisé en ce que l'élément d'appui est une pièce structurelle mobile librement suivant deux directions perpendiculaires entre elles et elles-mêmes également perpendiculaires à l'axe du support d'outil, mais par contre fixe suivant la direction axiale de ce support d'outil.

10. Outillage suivant la revendication 9, caractérisé en ce que l'élément d'appui est une table à mouvements croisés (19) mobile suivant la direction X et la direction Y, mais par contre fixe suivant la direction Z.

11. Outillage suivant la revendication 9, caractérisé en ce que l'élément de support est une plaque de palier hydrostatique (26) essentiellement en forme de disque, mobile suivant la direction radiale, éventuellement rotative, mais immobile suivant la direction de l'axe du support d'outil.

12. Outillage suivant l'une des revendications précédentes, caractérisé en ce que, au moins le long d'une partie de sa surface extérieure (8, 12) l'élément en forme de barre (5) offre un diamètre correspondant au moins approximativement au diamètre de la cavité à usiner.

13. Outillage suivant la revendication 12, caractérisé en ce que, dans la zone de son extrémité libre, dans laquelle est logé le porte-outil ou l'outil d'usinage, l'élément en forme de barre (5) offre un diamètre correspondant au moins approximativement au diamètre de la cavité à usiner.

14. Outillage suivant l'une des revendications précédentes, caractérisé en ce qu'il est monté rotatif dans une machine d'usinage, tandis que l'élément en forme de barre (5) est monté de façon à pouvoir se déplacer en translation longitudinale suivant la direction axiale.

15. Outillage suivant la revendication 14, caractérisé en ce que, pour le montage à palier de l'élément en forme de barre (5), il est prévu un palier combiné radial-axial (30) qui est accouplé à cet élément en forme de barre, de façon à pouvoir se déplacer avec celui-ci, en vue du déplacement de ce dernier en translation suivant la direction axiale de l'outillage et qui est relié à un organe d'entraînement (38) en vue de ce déplacement en translation axiale.

16. Outillage suivant l'une des revendications précédentes, caractérisé en ce que, dans la zone de l'extrémité libre de l'élément en forme de barre (5), il est prévu deux outils d'usinage (6) ou porte-outil (7) faisant entre eux un certain angle et prenant appui sur la ou les sur faces d'appui inclinée ou inclinées de 45 degrés.

FIG. 1

FIG. 2 a

FIG. 2 b

FIG. 3a

FIG. 4a

FIG. 3b

FIG. 4b